Europäisches Patentamt

European Patent Office

Office européen des brevets

(11) Publication number: **0 246 750 B1**

(12) **EUROPEAN PATENT SPECIFICATION**

(45) Date of publication of patent specification: **16.09.92**   (51) Int. Cl.⁵: **H01R 23/68**

(21) Application number: **87303470.6**

(22) Date of filing: **21.04.87**

(54) **Electrical connector arrangement for the distribution of different levels of power to a printed circuit board.**

(30) Priority: **22.04.86 US 855225**
**15.09.86 US 907696**
**15.09.86 US 907703**

(43) Date of publication of application:
**25.11.87 Bulletin  87/48**

(45) Publication of the grant of the patent:
**16.09.92 Bulletin  92/38**

(84) Designated Contracting States:
**DE FR GB IT**

(56) References cited:
**EP-A- 0 152 743**
**FR-A- 2 493 051**
**US-A- 4 519 667**

(73) Proprietor: **AMP INCORPORATED**
**P.O. Box 3608 470 Friendship Road**
**Harrisburg Pennsylvania 17105(US)**

(72) Inventor: **Swengel, Robert Charles, Jr.**
**4420 Webster Drive**
**York Pennsylvania 17402(US)**
Inventor: **Van Scyoc, William Crusey**
**600 Charles Street**
**Shippensburg Pennsylvania 17257(US)**
Inventor: **Weber, Ronald Martin**
**1425 Elm Street**
**Lebanon Pennsylvania 17042(US)**
Inventor: **Weidler, Charles Harry**
**926 First Street**
**Lancaster Pennsylvania 17603(US)**
Inventor: **Wise, James Henry**
**607 Cambridge Court**
**Palmyra Pennsylvania 17078(US)**

(74) Representative: **Warren, Keith Stanley et al**
**BARON & WARREN 18 South End Kensington**
**London W8 5BU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to an electrical connector arrangement for the distribution of different levels of power to a printed circuit board.

In processing units such as computers, it is necessary to supply widely varying power levels, such as high and lower current and data carrying signals, from a panel, typically a mother board, to an individual daughter board. In order to rationalise the board layout and facilitate assembly and disassembly of the daughter board with the mother board by a simple plugging action, it has been proposed to provide an array of different matable connectors which supply different power levels at a single location along one edge of a daughter board and on the face of the mother board.

FR-A-2 493 051 discloses a connector arrangement for the distribution of different levels of power between printed circuit boards comprising first and second pairs of matable individual connectors having different power carrying characteristics, a first connector of each pair having a pluggable mating face located transversely of a board-engaging face and the second connector of each pair having a complementary pluggable mating face located opposite a board-engaging face so that the first connectors of each pair can be mounted in a row along one edge of a daughter board with the mating faces extending perpendicular to the plane of the board and the second individual connector of respective pairs can be mounted in a row along the face of a mother board with matable connectors of respective pairs located in corresponding positions and their mating faces extending parallel to the plane of the mother board whereby the daughter board can be releasably connected to the mother board for simultaneous distribution of different power levels thereto by mating of the connectors in a simple plugging action.

A disadvantage of the connector arrangement described in the above-mentioned document is that the relative positions of the different connector types are arranged only by fixing the connectors to the circuit boards, and dedication of the circuit boards to only a single connector arrangement to meet only a single power supply requirement is necessary at the time of manufacture of the boards. In addition, the alignment and assembly of the connectors on the boards can be relatively difficult and time-consuming.

According to the present invention, the connectors are modular, the first individual modules of respective pairs being provided with means to link them together with other mutually opposite faces of the first modules adjacent to form a first composite connector body, and the second individual connectors of respective first and second pairs being provided with means to link them together with other mutually opposite faces of the modules adjacent to form a second composite connector body, the relative positions of the first and second individual modules in the composite bodies being interchangeable.

As the first individual connector modules of the first pairs can be linked together in different relative positions to form a composite body or unit with corresponding rearrangement of the second individual connector modules of the second pairs, the composite bodies are programmable prior to application to the circuit boards to meet alternative mixed power requirements. Furthermore, they are readily adapted for automated assembly together to form the different composite connector bodies enabling the manufacturer to standardize circuit board layout.

Preferably, the board engaging faces of the modules have the same common dimensions, facilitating further standardisation of the circuit board manufacture to meet different combinations of power level requirement.

A programmable modular connector assembly is described in EP-A-0 152 743, but the modules must be retained in juxtaposition by a separate frame or carrier and do not enable a daughter board to be plugged directly to a mother board to obtain the necessary supply of different power levels. Either frames of different sizes to accommodate different numbers of modules for different power supply requirements must be supplied, or a single frame oversize for many needs increasing the cost and unnecessary use of circuit board space. In addition, extra steps are required to complete the assembly of the modular connector to the printed circuit board.

A problem that is met in supplying higher current to printed circuit boards using terminals of small size is the formation of hot spots caused by uneven current flow through various locations in the terminal and at points of connection to the circuit board, with consequential risk of damage to the connectors' connections (particularly when soldered) and the circuit board.

Such a terminal may have terminal posts which extend from the terminal at different locations for connection to the circuit board and are of different resistivities, thereby to tend to equalise the current flow and avoid hot spots caused by high current concentrations.

A further problem that may be met is providing a compact polarising structure which can be readily changed to obtain different settings with simple tools.

DE-A-1 938 791 discloses a set of terminal blocks which can be mechanically interlocked with each other by means of hooked portions of the blocks. The blocks do not, however, receive electrical terminals which can be mated by mating pluggable mating faces of the blocks, but have bores in which wires can be secured by means of set screws in the blocks.

An embodiment of the invention will now be described by way of example with reference to the accompanying drawings in which:

Figure 1 is a perspective view of the modular connector assembly according to said embodiment;

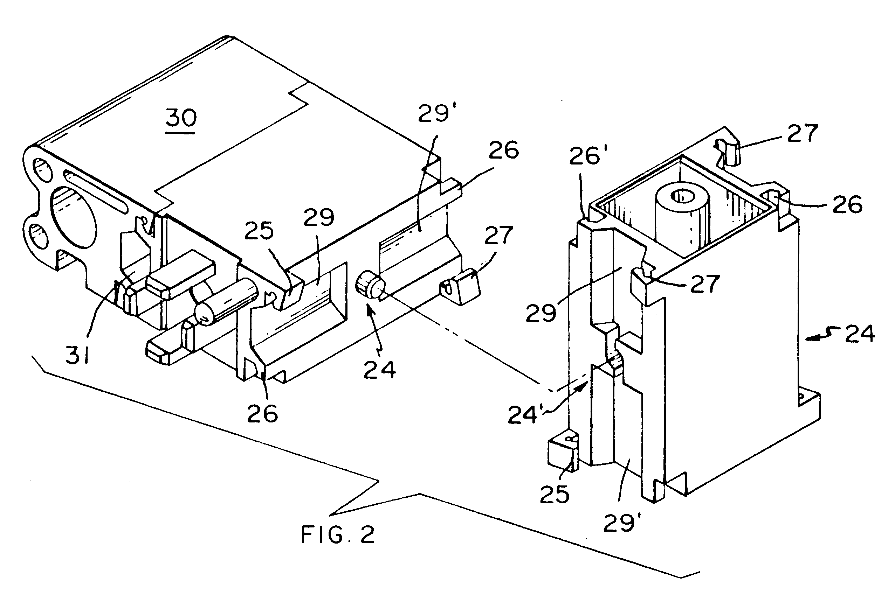

Figure 2 is a perspective view of first connectors of the first and second connector pairs;

Figures 3A and 3B are fragmentary elevational views of the module;

Figures 4A and 4B are, respectively, perspective views of the matable current carrying contact terminals;

Figures 5A and 5B are sectional views in orthogonal planes showing a mated current carrying module with the contacts of Figures 4A and 4B;

Figure 5C is a perspective view of a cap utilized in the connector of Figures 5A and 5B;

Figures 6A and 6B are perspective views of the male and female versions of higher current carrying power contact terminals of the invention;

Figure 7 is a partly sectional view of a connector incorporating the contacts of Figures 6A and 6B;

Figures 8A and 8B are cross-sectional views of examples of polarising modules before and after mating;

Figures 9A and 9B are end views of the polarising modules shown in Figure 8; and

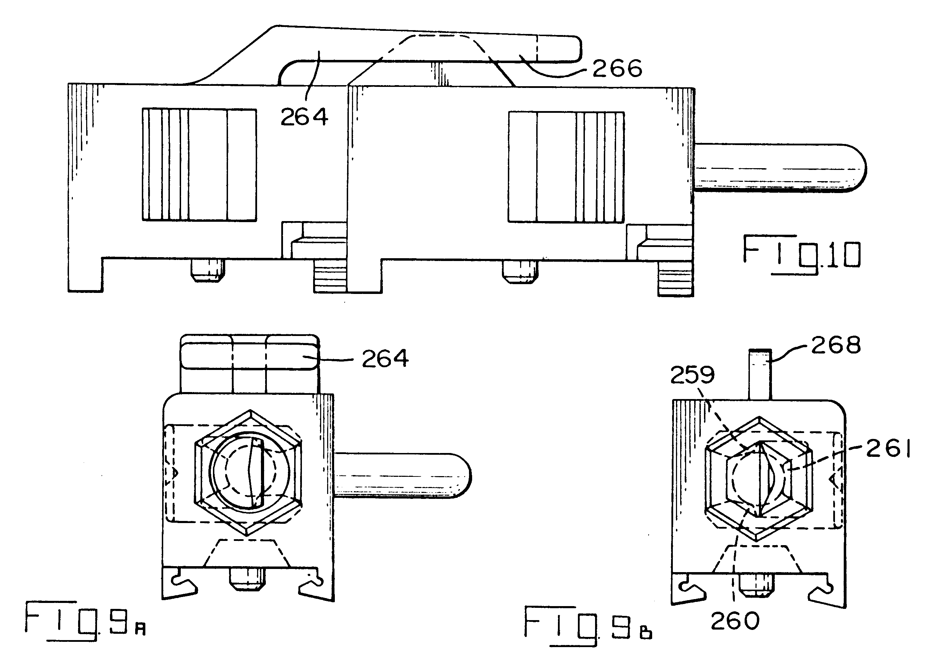

Figure 10 is a plan view of the mated polarising modules of Figure 8.

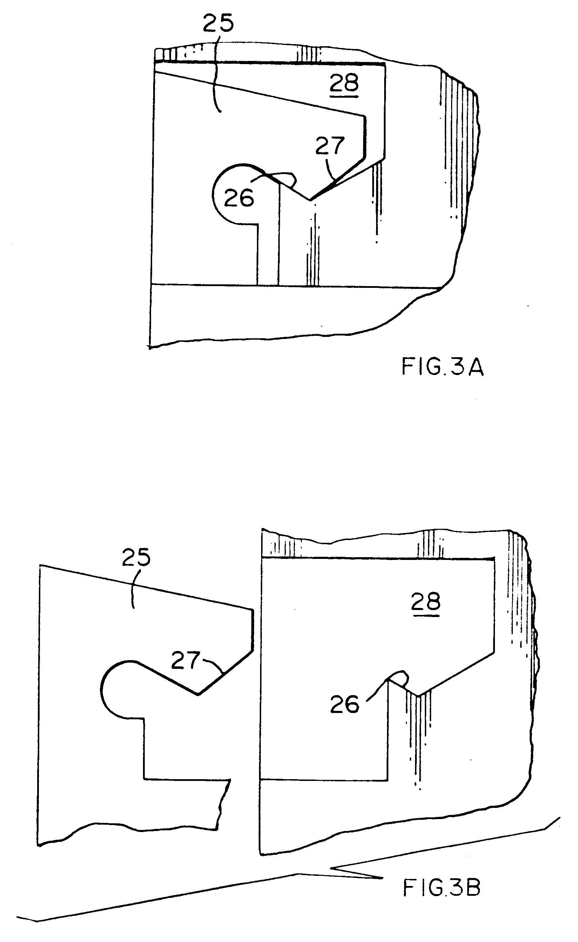

The modular connector assembly comprises first, second, and third pairs of matable individual connector modules 11,11'; 12,12'; and 13,13', respectively, each pair having contacts with different current-carrying characteristics. Each first connector module 11,12 or 13 of each pair has a board connecting face 17 located transversely of a pluggable mating face 18 and each second connector module 11',12' or 13' of each pair has a board-connecting portion 19 located opposite a pluggable mating face 21. The board-connecting portions have the same common dimensions. Each module is provided on respective other, mutually opposite, faces 24,24' with latch means to link them together comprising a plurality of interengageable hooks and catches 25 and 26 which face in opposite rotational senses on respective faces 24 and 24'. Each face is rectangular and the hooks and catches 25 and 26 are located on alternate corners equidistant from a central rotational axis at which is located a pivot pin on one face 24 and a socket on the other face 24'. The hooks 25 are resilient and are formed with camming noses 27 such that they can flex to engage the catches 26 which are located in pockets 28 formed in the face during movement from the condition of Figure 3A to that of Figure 3B. Each face is formed with recesses 29,29' opening at corresponding locations, which recesses are brought into registration to form cooling cavities 31 when the modules are rotated together to bring the hooks and catches into latching engagement.

It will be evident from the foregoing that individual first connector modules of different current-carrying types can be latched together to form a composite connector half mounted by means of end modules 30 having similar latching means and coding pins 31, projecting from mating faces without the need for further support, and such composite connector half mounted to extend along one edge of a daughter board 33 for plugging engagement with a similar composite connector half comprising individual second connector modules mounted (with complementary end modules 30') on the face of a mother board to form a modular connector assembly to distribute various different power inputs between the mother and daughter boards.

If desired, the composite connector half formed by the second individual connectors can be mounted in a bulkhead rather than on the mother board.

An advantage of the particular latching means is that the rotational movement needed for latching together individual modules precludes inadvertent unlatching.

It is envisaged that some modules may be adapted to carry fibre optic power supplies to the boards.

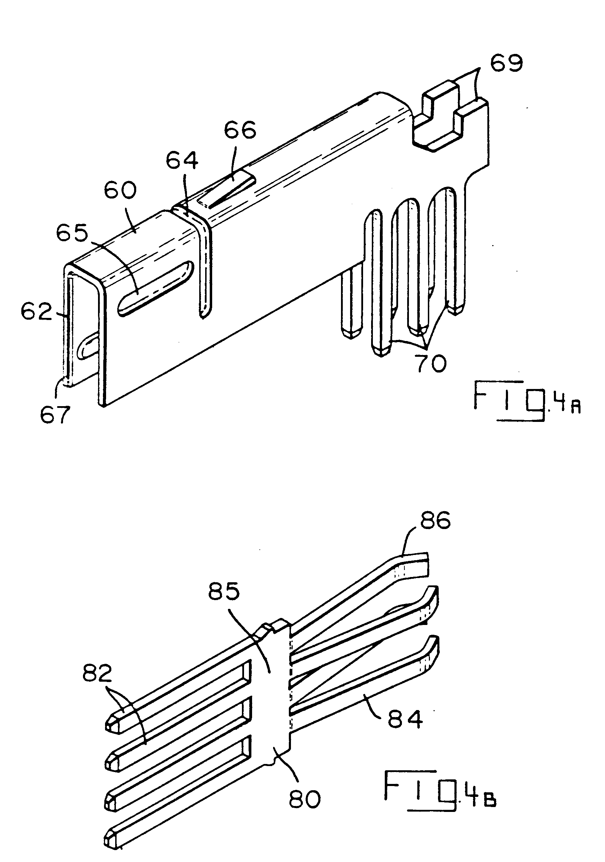

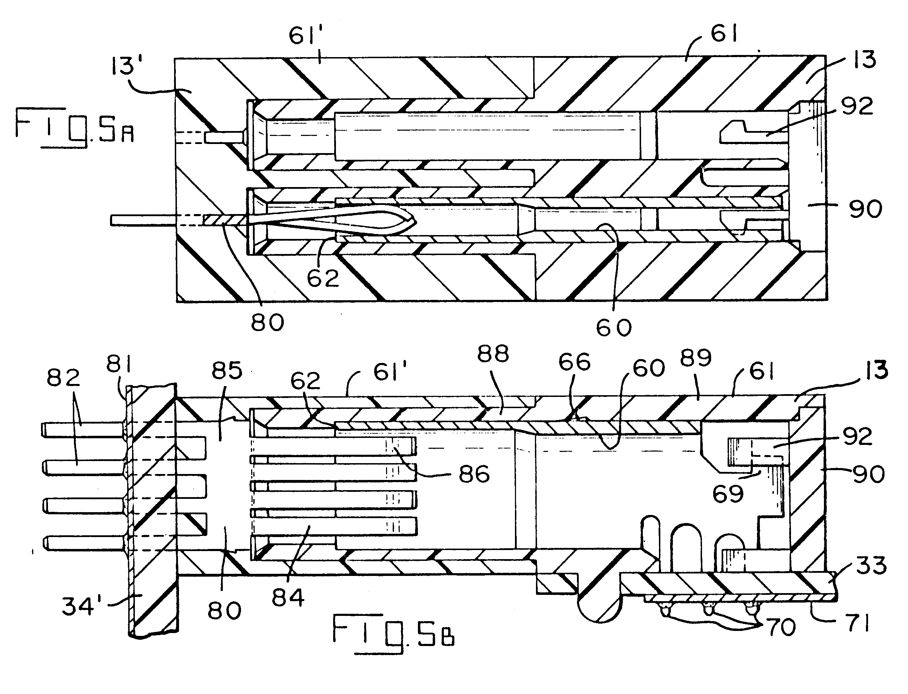

Referring now to Figures 4A, 4B, 5A and 5B, as shown, stamped and formed mating electrical terminals 60 and 80 are mounted in the insulating housings 61,61' of modules 12 and 12' to effect a medium level power connection therebetween, terminating respectively conductive paths 71 and 81 on boards 33 and 34'. Terminal 60 includes a forwardly extending, inverted, channel-section body portion 62 which is relatively long and narrow and is formed with adjacent, longitudinally and transversely extending, stiffening embossments 65 and 64, respectively, defining a front mouth. A locking barb 66 extends outwardly rearwardly from the base of the channel and engages a projection or shoulder in the housing interior to secure the terminal 60 therewithin. The rear end is cut away to define catches 69 which project rearwardly and upwardly from the side walls to anchor an insulating cap, described below.

A row of three pairs of aligned posts 70 which are soldered or force fit in apertures in the daughter board connecting to pad 71 extend from the channel side walls adjacent the rear. Rearwardly spaced successive posts are of decreasing effective length with respect to their connection points to the daughter board to balance out the current flow through the terminals and posts, total resistance of the forward posts being larger than the rearward posts, so that current flowing through the terminal 60 from the mouth will be more evenly distributed through each post, thereby distributing the heat generated by current flow more evenly through the terminal posts and circuitry of the board.

Equalising the current flow by varying the length of the posts enables the posts to be of standard cross-sectional size, obviating any requirement for the provision of nonstandard conductive pads or paths on the circuit boards which would add to the cost. In addition, this enables the posts to be located in equally spaced-apart relation, providing both a stable mounting for the terminal and an evenly distributed current flow in the circuit board.

As shown in Figures 5A and 5B, the terminal may be made of dual thickness stock, the rear portion from which the posts extend being of thicker stock than the forward portion better to carry the high currents concentrated therein. In this case, the embossment 64 may be omitted.

As shown in Figure 4B, as stamped and formed male terminal 80 includes multiple posts 82 for connection to pad 81 and a like number of cantilever spring contact fingers 84 substantially evenly spaced from respective posts, extending rearwardly and forwardly from respective opposite edges of a planar body portion 85, providing conductive paths of equal length and resistance from the mother board 34′ to the mouth 67 of the mating terminal 60.

Alternate contact fingers 84 diverge from a planar body portion 85 in opposite senses and their free ends 86 are curved back towards each other facilitating mating with terminal 60 without stubbing and providing multiple evenly-spaced points of contact on the opposite sides of the terminal 60 for optimum current distribution. The male terminal is very inexpensive to manufacture yet provides an effective current carrying connection to paths 81 on the mother board 34′.

As shown in Figures 5A, 5B and 5C, the terminals are recessed from the forward mating faces of the module housings to avoid shorting. The housing 61 is open at a rear end and integrally formed by moulding with a tubular mating portion 88 and a channel section rearward portion 89 with the channel mouth open to the circuit board. A plastic cap 90 is formed with fingers 92 by which it can be snap fitted into the rear of module 61 by the fingers engaging the projections 69 and the rearmost of the legs 70 of terminal 60. The cap 90 assures insulation of the terminals 60 while permitting the housing to be moulded in a simple straight-draw mould.

The contact combination of terminals 60 and 80 has a design rating in excess of fifteen amperes at 280 volts D.C. so that each module 12 has a design rating of thirty amperes or better. It should be noted that this relatively high current rating is achieved in a very narrow box-like configuration which minimises occupation of board space, such boards being very costly particularly with heavy gauge, high current, capacity.

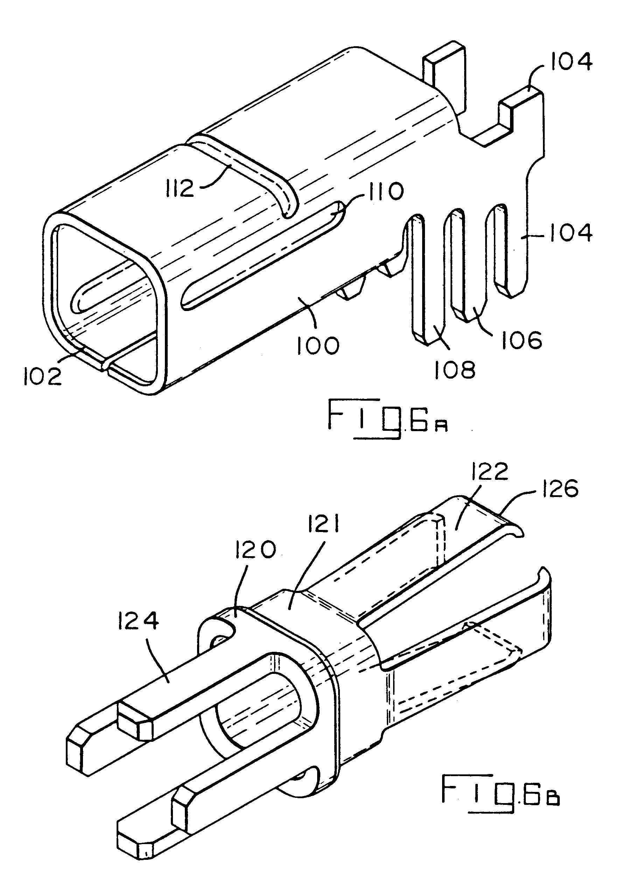

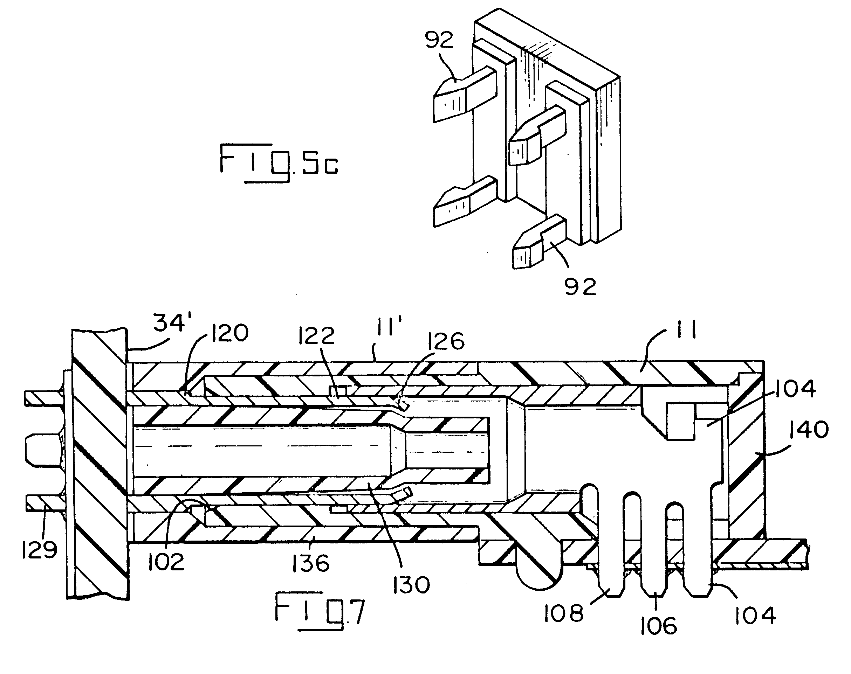

Referring now to Figures 6A, 6B and 7, the higher current carrying modules 11 and 11′ include a female terminal 100 and a male terminal 120, respectively. Terminal 100 is similar to the previously described terminal and includes a tubular body 100 with a forward, mating receptacle portion of rectangular cross section, with a bevelled mouth 102 formed with longitudinal and transverse embossments 112 and 110, board connecting post pairs 104,106,108, and catches 104.

The male terminal 120 is stamped and formed from dual thickness stock and includes a series of cantilever spring contact fingers 122,124 extending generally coaxially forwardly and rearwardly, respectively, from aligned locations equally spaced around the periphery of a tubular body portion 121. The contact fingers 122 diverge radially outwardly as they extend towards their free ends which are bent inwardly to avoid stubbing on mating.

The housing of module 11′ is integrally moulded with centrally located, forwardly extending, tapering tubular projection 130, having a free end of further reduced diameter extending beyond the free ends of the terminal, the body portion and contact fingers of which are received in a recess defined between the projection 130 and an outer wall 136 of the module. The divergence maintains a separation between the projection 130 and contact portions of the contact finger adjacent the free ends, and avoids a rolling action on engagement with the housing of module 11.

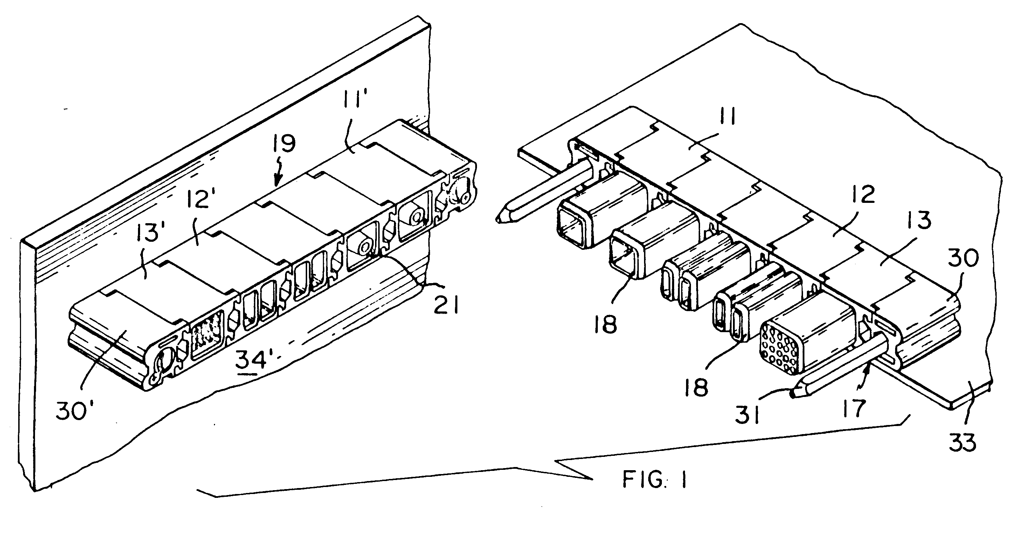

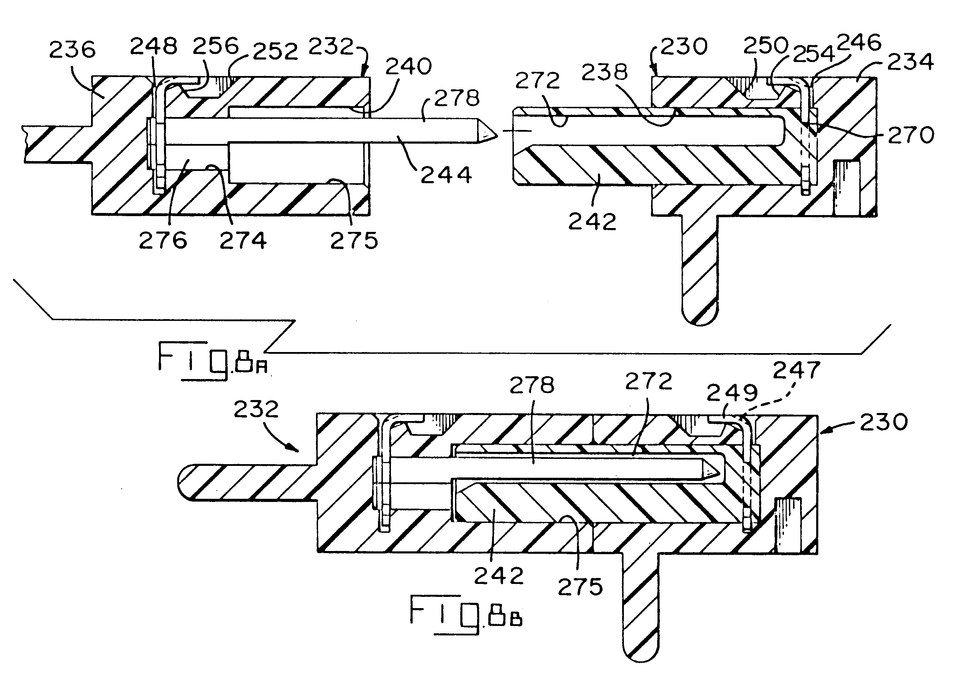

In examples of polarising modules 230,232 shown in Figures 8A and BB, the plastics housing modules 234,236, respectively, are generally similar in overall shape to those 30,30′ shown schematically and are formed with respective hexagonal section cavities 238,240 receiving a polarising projection (not in Figure 1 version) and key 242,244, respectively, and intersected by bowed snap ring receiving slots 246,248, respectively. Access recesses 250,252 are formed with guiding abutment surfaces 254,256 for receipt of a lever release tool, such as the blade of a screwdriver receivable in an eye 247 provided in a tab 249 of the ring. Each snap ring 258 is formed with three radially inwardly protruding groove engaging lands 259,260,261 at a free end of each leg and at a central location, respectively. The end walls of the mating modules are provided with a resilient cantilever latching arm 264 having a latching eye 266 receiving a latching ramp 268 in known manner.

The polarising projection 242 is moulded of plastic material with a hexagonal section body with a snap ring receiving groove 270 at a rear end and an eccentrically located, axially longitudinally extending key receiving slot 272.

The cavity 240 of module 232 has a hexagonal section counterbore 274 at a rear end of smaller cross-sectional size than a front projection receiving portion 275 receiving a hexagonal section rear body portion 276 of the key 244 which is locked in position in a similar manner to projection 242. A forward mating portion 278 of the key is of semihexagonal section and projects through the front cavity portion 275 at an eccentric location. Both the mating portion 278 of the key and a forward portion of the projection protrude from the mating face beyond mating ends of the other modules and internest when mated, as shown in Figure 8B, beyond the opposed faces, avoiding a need for an excessively long projection for effective guiding which would arise if a projection from only one module were provided.

In summary, the modular concept permits intermating of several different kinds of modules in a way which fixes dimensions and allows a preassembly of modules prior to insertion in printed circuit boards, occupies relatively little board space, and provides several types of power terminals having themselves features to better assure distribution of current without hot spots, and a particular type of polarisation which allows considerable flexibility in adapting to electrical and electronic packaging.

## Claims

1. A connector arrangement for the distribution of different levels of power between printed circuit boards (33, 34′) comprising first and second pairs of matable individual connectors (11,11′; 12,12′; 13,13′) having different power carrying characteristics, a first connector (11,12,13) of each pair (11,11′; 12,12′; 13,13′) having a pluggable mating face (18) located transversely of a board-engaging face (17) and the second connector (11′,12′,13′) of each pair (11,11′; 12,12′; 13,13′) having a complementary pluggable mating face (21) located opposite a board-engaging face (19) so that the first connectors (11,12,13) of each pair (11,11′; 12,12′; 13,13′) can be mounted in a row along one edge of a daughter board (33) with the mating faces (18) extending perpendicular to the plane of the board (33), and the second individual connectors (11′, 12′,13′) of respective pairs (11,11′; 12,12′; 13,13′) can be mounted in a row along the face of a mother board (34) with matable connectors (11,11′; 12,12′; 13,13′) of respective pairs located in corresponding positions and their mating faces (21) extending parallel to the plane of the mother board (34′) whereby the daughter board (33) can be releasably connected to the mother board (34′) for simultaneous distribution of different power levels thereto by mating of the connectors (11,11′; 12,12′; 13,13′) in a simple plugging action,

characterised in that the connectors (11,11′; 12,12′; 13,13′) are modular, first individual modules (11,12,13) of respective pairs being provided with means (25,26) to link them together with other mutually opposite faces (24,24′) of the first modules (11,12,13) adjacent to form a first composite connector body, and the second individual connectors (11′,12′, 13′) of respective first and second pairs (11,11′; 12,12′; 13,13′) being provided with means (25,26) to link them together with other mutually opposite faces (24,24′) of the modules (11′, 12′,13′) adjacent to form a second composite connector body, the relative positions of the first and second individual modules (11,11′; 12,12′; 13,13′) in the composite bodies being interchangeable.

2. A connector arrangement according to claim characterised in that the board engaging faces (17,19) of the modules (11,11′; 12,12′; 13,13′) have the same common dimensions.

3. A connector arrangement according to claim 1 or claim 2, characterised in that the link means (25,26) of the individual modules (11,11′; 12,12′; 13,13′) of respective pairs are hermaphroditic.

4. A connector arrangement according to any one of the preceding claims, characterised in that one of the pairs of connector modules (11,11′ or 12,12′) is adapted to carry high current levels, the first connector module (11 or 12) of the one pair (11,11′ or 12,12′) including a terminal (60 or 100) with a forward contact portion (67 or 102) at a contact face (18), a body portion (62 or 100) extending longitudinally rearwardly from the contact portion (67,102), and a series of circuit board connecting posts (70 or 104,106,108) extending from the body portion (62 or 100) at longitudinally spaced-apart intervals, successive posts (70 or 108,106,104) which are of increased separation from the contact portion (67 or 102) being of different resistivities thereby to tend to equalise the current flow through such posts (70 or 108,106,104) to the daughter board circuit.

5. A connector arrangement according to claim 4, characterised in that successive posts (70 or 108,106,104) are of decreasing effective lengths thereby to decrease their respective resistivities.

6. A connector arrangement according to claim 5, characterised in that the terminal (60 or 100) is stamped and formed of sheet metal and the contact portion (67 or 102) defines a receptacle having opposed side walls joined by a base wall, the posts (70 or 108,106,104) extending in two rows from rearward portions of the respective side walls.

7. A connector arrangement according to claim 6, characterised in that the terminal (60 or 100) is latched in a housing (61) moulded of plastics material with a forward tubular portion (88) along which the receptacle (62) extends axially and a channel section rearward portion (89) open toward the circuit board (33) through which opening the posts (70 or 108,106,104) extend, latch means (69,104) being formed by rear portions of the terminal side walls, at a location spaced from the terminal posts (70 or 108,106,104), a cap (90,140) moulded of plastics material with resilient locking legs (92) outstanding therefrom engageable with the latch means (69,104) to lock the cap (90, 140) on the rearward end of the housing (61) to close the rearward end.

8. A connector arrangement according to claim 1 characterised by a terminal (60 or 100) for conducting high current between first and second contact interfaces comprising a contact portion (67 or 102) for receiving current from a first contact interface, a body portion (62 or 100) extending longitudinally away from the contact portion (67 or 102), and a series of circuit board connecting posts (70 or 108,106,104) extending from the body portion (62 or 100) at longitudinally spaced-apart intervals, wherein successive posts (70 or 108, 106,104) which are of increased separation from the contact portion (67 or 102) being of different resistivities thereby to tend to equalise the current flow through such posts (70 or 108, 106,104) to a second contact interface.

9. A connector arrangement according to claim 1, characterised by a high current carrying connector module (11′) having a housing moulded in one piece of plastics material and comprising an outer wall (136) defining a receptacle having an open front and a projection (130) located centrally within the receptacle and extending towards the front such that there is defined between the wall (136) and the projection (130) a first terminal receiving recess; a terminal (120) received in the recess and having a ring of cantilever spring contact fingers (122) extending forwardly around the projection (130) to a location set back from a front end of the projection (130), such that a mating terminal of complementary shape to the terminal (120) can be received in the receptacle in mating electrical engagement therewith, the projection preventing inadvertent manual contact with the terminal (120) in an unmated condition of the connector module (11′).

10. A connector arrangement according to claim 1, characterised by a polarising module pair (30,30′ or 230,232), one module (230) of which includes a housing (234) moulded of plastics material with a multifaced cavity (238), a polarising projection (242) having a corresponding multifaced surface for receipt in said cavity (234) in different rotational positions corresponding to the opposition of respective different faces of the cavity (234) and projection (242), a forward end of the projection (242) being free of a mating face of the housing for mating engagement with a corresponding multifaced cavity (240) of the other module (232) of the pair (230,232), the other end of the projection (242) being formed with a groove (270) and a snap ring adapted to be inserted through an access opening (250) in the housing (234) to bring respective opposite legs of the snap ring into the groove (270) to lock the projection axially in the housing (234) in any one of the rotational positions, one end portion (249) of the snap ring extending from the housing for engagement by a release tool to withdraw the snap ring from the groove thereby to release the projection (242) for withdrawal from the cavity (238) and rotation to another polarising position.

11. A connector arrangement according to claim 10, characterised in that the projection (242) is formed with a key receiving slot (272) located to extend axially and eccentrically therealong, the housing (236) of the other module (232) being provided with a key (244) located to extend eccentrically out of the cavity (240) of the other module (232) from the mating face in one of several rotational positions, such that the key (244) is received in the slot (272) when the projection (242) is mated with the cavity (240) of the other module (230) to provide polarised mating of the module pairs (230,232).

## Patentansprüche

1. Verbinderanordnung für die Verteilung unterschiedlicher Leistungspegel zwischen gedruckten Schaltungsplatten (33, 34'), mit einem ersten und einem zweiten Paar miteinander verbindbarer Einzelverbinder (11, 11'; 12, 12'; 13, 13') mit unterschiedlichen Leistungsübertragungseigenschaften, wobei ein erster Verbinder (11, 12, 13) jedes Paares (11, 11'; 12, 12'; 13, 13') eine quer zu einer Plattenangreifseite (17) angeordnete Steckverbindungsseite (18) aufweist und der zweite Verbinder (11', 12', 13') jedes Paares (11, 11'; 12, 12'; 13, 13') eine dazu komplementäre Steckverbindungsseite (21) aufweist, die einer Plattenangreifseite (19) entgegengesetzt angeordnet ist, so daß sich die ersten verbinder (11, 12, 13) jedes Paares (11, 11'; 12, 12'; 13, 13') in einer Reihe längs eines Rands einer Tochterplatte (33) derart anbringen lassen, daß sich die Verbindungsseiten (18) rechtwinklig zu der Ebene der Schaltungsplatte (33) erstrecken, und sich die zweiten Einzelverbinder (11', 12', 13') der jeweiligen Paare (11, 11'; 12, 12'; 13, 13') in einer Reihe längs der Fläche einer Mutterplatte (34) anbringen lassen, wobei sich miteinander verbindbare Verbinder (11, 11'; 12, 12'; 13, 13') der jeweiligen Paare in einander entsprechenden Positionen befinden und sich ihre Verbindungsseiten (21) parallel zu der Ebene der Mutterplatte (34') erstrecken, wodurch sich die Tochterplatte (33) zur gleichzeitigen Verteilung unterschiedlicher zugeführter Leistungspegel durch Verbinden der Verbinder (11, 11'; 12, 12'; 13, 13') miteinander in einem einfachen Steckvorgang mit der Mutterplatte (34) lösbar verbinden läßt, dadurch gekennzeichnet, daß die Verbinder (11, 11'; 12, 12'; 13, 13') modulartig ausgebildet sind, wobei erste Einzelmodule (11, 12, 13) der jeweiligen Paare mit Einrichtungen (25, 26) versehen sind zum darartigen Verbinden derselben miteinander, daß einander gegenüberliegende Flächen (24, 24') der ersten Module (11, 12, 13) zur Bildung eines ersten zusammengesetzten Verbinderkörpers aneinanderliegen, und wobei die zweiten Einzelverbinder (11', 12', 13') des jeweiligen ersten und zweitan Paares (11, 11'; 12, 12'; 13, 13') mit Einrichtungen (25, 26) versehen sind zum derartigen Verbinden derselben miteinander, daß einander gegenüberliegende Flächen (24, 24') der Module (11', 12', 13') zur Bildung eines zweiten zusammengesetzten Verbinderkörpers aneinanderliegen, wobei die relativen Positionen das ersten und des zweiten Einzelmoduls (11, 11'; 12, 12'; 13, 13') in den zusammengesetzten Verbinderkörpern untereinander austauschbar sind.

2. Verbinderanordnung nach Anspruch 1, dadurch gekennzeichnet, daß die Plattenangreifflächen (17, 19) der Module (11, 11'; 12, 12'; 13, 13') dieselben allgemeinen Abmessungen besitzen.

3. Verbinderanordnung nach Anspruch 1 oder 2, dadurch gekennzeichnet, daß die Verbindungseinrichtungen (25, 26) der einzelnen Module (11, 11'; 12, 12'; 13, 13') der jeweiligen Paare zwitterartig ausgebildet sind.

4. Verbinderanordnung nach einem der vorausgehenden Ansprüche, dadurch gekennzeichnet, daß eines der Paare von Verbindermodulen (11, 11' oder 12, 12') zum Führen hoher Strompegel ausgelegt ist, daß der erste Verbindermodul (11 oder 12) des einen Paares (11, 11' oder 12, 12') einen Anschluß (60 oder 100) aufweist, dar einen vorderen Kontaktbereich (67 oder 102) an einer Kontaktseite (18), einen sich in Längsrichtung rückwärts von dem Kontaktbereich (67, 102) erstreckenden Körperbereich (62 oder 100) sowie eine Reihe von Schaltungsplatten-Verbindungsstiften (70 oder 104, 106, 108) aufweist, die sich in in Längsrichtung voneinander beabstandeten Intervallen von dem Körperbereich (62 oder 100) wegerstrecken, wobei aufeinanderfolgende Stifte (70 oder 108, 106, 104), die eine zunehmende Beabstandung von dem Kontaktbereich (67 oder 102) besitzen, unterschiedliche spezifische Widerstände und damit die Tendenz haben, den durch diese Stifte (70 oder 108, 106, 104) stattfindenen Stromfluß zu der Tochterschaltungsplatte gleichmäßig zu machen.

5. Verbinderanordnung nach Anspruch 4, dadurch gekennzeichnet, daß aufeinanderfolgende Stifte (70 oder 108, 106, 104) abnehmende effektive Längen aufweisen und dadurch in ihrem jeweiligen spezifischen Widerstand abnehmen.

6. Verbinderanordnung nach Anspruch 5, dadurch gekennzeichnet, daß dar Anschluß (60 oder 100) durch Stanzen und Formen aus Metallblech gebildet ist und der Kontaktbereich (67 oder 102) eine Buchse bildet, die einander gegenüberliegende und durch eine Basiswand verbundene Seitenwände aufweist, wobei sich die Stifte (70 oder 108, 106, 104) in zwei Reihen von rückwärtigen Bereichen der jeweiligen Seitenwände wegerstrecken.

7. Verbinderanordnung nach Anspruch 6, dadurch gekennzeichnet, daß der Anschluß (60 oder 100) in einem aus Kunststoffmaterial geformten Gehäuse (61) mit einem vorderen röhrenartigen Bereich (88) verriegelt ist, entlang dessen sich die Buchse (62) in Axialrichtung erstreckt und sich ein kanalförmiger rückwärtiger Bereich (89) in Richtung auf die Schaltungsplatte (33) öffnet, wobei sich die Stifte (70 oder 108, 106, 104) durch diese Öffnung hindurcherstrecken, daß eine Verriegelungseinrichtung (69, 104) durch rückwärtige Bereiche der Anschlußseitenwände an einer von den Anschlußstiften (70 oder 108, 106, 104) beabstandeten Stelle gebildet ist, und daß eine aus Kunststoffmaterial geformte Kappe (90, 140) mit von dieser wegstehenden, federnd nachgiebigen Verriegelungsschenkeln (92) mit der Verriegelungseinrichtung (69, 104) in Eingriff bringbar ist, um die Kappe (90, 140) zum Verschließen des rückwärtigen Endes des Gehäuses (61) an dem rückwärtigen Ende zu verriegeln.

8. Verbinderanordnung nach Anspruch 1, gekennzeichnet durch einen Anschluß (60 oder 100) zum Leiten von hohem Strom zwischen einer ersten und einer zweiten Kontaktschnittstelle, wobei der Anschluß einen Kontaktbereich (67 oder 102) zum Empfang von Strom von einer ersten Kontaktschnittstelle, einen sich in Längsrichtung von dem Kontaktbereich (67 oder 102) wegerstreckenden Körperbereich (62 oder 100) sowie eine Reihe von Schaltungsplatten-Verbindungsstiften (70 oder 108, 106, 104) aufweist, die sich in in Längsrichtung voneinander beabstandeten Intervallen von dem Körperbereich (62 oder 100) wegerstrecken, wobei aufeinanderfolgende Stifte (70 oder 108, 106, 104), die eine zunehmende Beabstandung von dem Kontaktbereich (67 oder 102) besitzen, unterschiedliche spezifische Widerstände und damit die Tendenz haben, den durch diese Stifte (70 oder 108, 106, 104) stattfindenden Stromfluß zu einer zweiten Kontaktschnittstelle gleichmäßig zu machen.

9. Verbinderanordnung nach Anspruch 1, gekennzeichnet durch einen zum Führen von hohem Strom ausgelegten Verbindermodul (11') mit einem in einem Stück aus Kunststoffmaterial geformten Gehäuse mit einer Außenwandung (136), die eine Buchse definiert, welche eine offene Vorderseite besitzt und einen zentral innerhalb der Buchse angeordneten Vorsprung (130) aufweist, der sich derart in Richtung auf die Vorderseite erstreckt, daß zwischen der Wandung (136) und dem Vorsprung (130) eine erste Anschlußaufnahmeaussparung definiert ist; wobei in der Aussparung ein Anschluß (120) aufgenommen ist, der einen Ring aus freitragenden Federkontaktfingern (122) aufweist, die sich um den Vorsprung (130) herum bis zu einer von einem vorderen Ende des Vorsprungs (130) zurück-gesetzten Stelle vorerstrecken, so daß ein damit verbindbarer Anschluß mit zu dem Anschluß (120) komplementärer Gestalt in der Buchse in elektrischem Verbindungseingriff mit dieser aufnehmbar ist, wobei der Vorsprung eine unbeabsichtigte Berührung des Anschlusss (120) von Hand im unverbundenen Zustand des Verbindermoduls (11') verhindert.

10. Verbinderanordnung nach Anspruch 1, gekennzeichnet durch ein Polarisiermodulpaar (30, 30' oder 230, 232), bei dem ein Modul (230) ein aus Kunststoffmaterial geformtes Gehäuse (234) mit einem Vielseit-Hohlraum (238) aufweist, wobei ein Polarisier-Vorsprung (242) eine entsprechende Vielseit-Oberfläche zur Aufnahme in dem Hohlraum (234) in verschiedenen rotationsmäßigen Positionen entsprechend der Gegenüberanordnung der jeweiligen verschiedenen Seiten von Hohlraum (234) und Vorsprung (242) aufweist, wobei ein vorderes Ende des Vorsprungs (242) von einer Verbindungsseite des Gehäuses abliegt, um in Verbindungseingriff mit einem entsprechenden Vielseit-Hohlraum (240) des anderen Moduls (232) des Paares (230, 232) zu treten, wobei das andere Ende des Vorsprungs (242) mit einer Nut (270) ausgebildet ist und ein Schnappring durch eine Zugangsöffnung (250) in dem Gehäuse (234) einführbar ist, um einander jeweils gegenüberliegende Schenkel des Schnapprings in die Nut (270) zu bringen und dadurch den Vorsprung in dem Gehäuse (234) in einer der rotationsmäßigen Positionen axial zu verriegeln, wobei sich ein Endbereich (249) des Schnapprings von dem Gehäuse wegerstreckt und mit einem Freigabewerkzeug greifbar ist, um den Schnappring aus der Nut zu entfernen und dadurch den Vorsprung (242) zum Entfernen desselben aus dem Hohlraum (238) und zum rotationsmäßigen Bewegen desselben in eine andere Polarisierposition freizugeben.

**11.** Verbinderanordnung nach Anspruch 10, dadurch gekennzeichnet, daß der Vorsprung (242) mit einem Rippenaufnahmeschlitz (272) ausgebildet ist, der sich exzentrisch in Axialrichtung längs des Vorsprungs erstreckt, daß das Gehäuse (236) des anderen Moduls (232) mit einer Rippe (244) versehen ist, die sich derart in einer von mehreren rotationsmäßigen Positionen exzentrisch aus dem Hohlraum (240) des anderen Moduls (232) und von der Verbindungsseite herauserstreckt, daß die Rippe (244) bei Verbindung des Vorsprungs (242) mit dem Hohlraum (240) des anderen Moduls (240) in dem Schlitz (272) aufgenommen ist und dadurch eine polarisierte Verbindung der Modulpaare (230, 232) geschaffen ist.

## Revendications

**1.** Assemblage de connecteurs pour la distribution de différents niveaux de puissance entre des cartes (33, 34') à circuits inprimés, comportant des première et seconde paires de connecteurs individuels accouplables (11, 11' ; 12, 12' ; 13, 13') ayant des caractéristiques de transport de puissance différentes, un premier connecteur (11, 12, 13) de chaque paire (11, 11' ; 12, 12' ; 13, 13') ayant une face d'accouplement enfichable (18) disposée transversalement à une face (17) d'engagement de carte et le second connecteur (11', 12', 13') de chaque paire (11, 11' ; 12, 12' ; 13, 13') ayant une face d'accouplement enfichable complémentaire (21) située de façon à être opposée à une face (19) d'engagement de carte afin que les premiers connecteurs (11, 12, 13) de chaque paire (11, 11' ; 12, 12' ; 13, 13') puissent être montés en une rangée le long d'un bord d'une carte-fille (33), les faces d'accouplement (18) s'étendant perpendiculairement au plan de le carte (33), et que les seconds connecteurs individuels (11', 12', 13') des paires respectives (11, 11' ; 12, 12' ; 13, 13') puissent être montés en une rangée le long de la face d'une carte-mère (34), des connecteurs accouplables (11, 11' ; 12, 12' ; 13, 13') de paires respectives étant placés dans des positions correspondantes et leurs faces d'accouplement (21) s'étendant parallèlement au plan de la carte-mère (34') de manière que la carte-fille (33) puisse être connectée de façon amovible à la carte-mère (34') pour une distribution simultanée à celle-ci de différents niveaux de puissance par l'accouplement des connecteurs (11, 11' ; 12, 12' ; 13, 13') en une action d'enfichage simple, caractérisé en ce que les connecteurs (11, 11' ; 12, 12' ; 13, 13') sont modulaires, des premiers modules individuels (11, 12, 13) de paires respectives étant pourvus de moyens (25, 26) destinés à les relier entre eux, d'autres faces mutuellement opposées (24, 24') des premiers modules (11, 12, 13) étant adjacentes, pour former un premier corps de connecteur composé, et les seconds connecteurs individuels (11', 12', 13') des première et seconde paires respectives (11, 11' ; 12, 12' ; 13, 13') étant pourvues de moyens (25, 26) destinés à les relier entre eux, d'autres faces mutuellement opposées (24, 24') des modules (11', 12', 13') étant adjacentes, pour former un second corps de connecteur composé, les positions relatives des premiers et seconds modules individuels (11, 11' ; 12, 12' ; 13, 13') dans les corps composés étant interchangeables.

**2.** Assemblage de connecteurs selon la revendication 1, caractérisé en ce que les faces (17, 19) d'engagement de cartes des modules (11, 11' ; 12, 12' ; 13, 13') ont les mêmes dimensions communes.

**3.** Assemblage de connecteurs selon la revendication 1 ou la renvendication 2, caractérisé en ce que les moyens de liaison (25, 26) des modules individuels (11, 11' ; 12, 12' ; 13, 13') de paires respectives sont hermaphrodites.

**4.** Assemblage de connecteurs selon l'une quelconque des revendications précédentes, caractérisé en ce qu'une première des paires de modules (11, 11' ou 12, 12') de connecteurs est destinée à porter des niveaux de courant élevés, le premier module (11 ou 12) de connecteurs de la première paire (11, 11' ou 12, 12') comprenant une borne (60 ou 100) ayant une partie avant de contact (67 ou 102) à une face de contact (18), une partie de corps (62 ou 100) s'étendent longitudinalement vers l'arrière depuis la partie de contact (67, 102), et une série de broches (70 ou 104, 106, 108) de connexion à une carte à circuit s'étendant depuis la partie de corps (62 ou 100) à des intervilles espacés longitudinalement, les broches successives (70 ou 108, 106, 104), qui sont séparées d'une distance croissante de la partie de contact (67 ou 102), étant de résistivités différentes afin de tendre à égaliser le flux de courant passant par ces broches (70 ou 108, 106, 104) vers le circuit de la carte-fille.

**5.** Assemblage de connecteurs selon la revendication 4, caractérisé en ce que des broches successives (70 ou 108, 106, 104) sont de longueurs utiles décroissantes afin que leurs résistivités respectives diminuent.

6.  Assemblage de connecteurs selon la revendications 5, caractérisé en ce que la borne (60 ou 100) est découpée et formée en métal en feuilles et la partie de contact (67 ou 102) définit une douille ayant des parois latérales opposées reliées par une parois de base, les broches (70 ou 108, 106, 104) s'étendent en deux rangées depuis les parties arrière des parois latérales respectives.

7.  Asssemblage de connecteurs selon la revendication 6, caractérisé en ce que la borne (60 ou 100) est accrochée dans un boîtier (61) moulé en matière plastique avec une partie tubulaire avant (88) le long de laquelle la douille (62) s'étend axialement et une partie arrière (89) de section en gouttière s'ouvrant vers la carte (33) à circuit, ouverture à travers laquelle les broches (70 ou 108, 106, 104) s'étendent, des moyens d'accrochage (69, 104) étant formés par des parties arrière des parois latérales de la borne, en un emplacement espacé des broches (70 ou 108, 106, 104) de la borne, un chapeau (90, 140) moulé en matière plastique comportant des doigts élastiques (92) de verrouillage qui en font saillie et qui peuvent s'enclencher avec les moyens d'accrochage (69, 104) pour verrouiller le chapeau (90, 140) sur l'extrémité arrière du boîtier (61) afin de fermer l'extrémité arrière.

8.  Assemblage de connecteurs selon la revendication 1, caractérisé par une borne (60 ou 100) destinée à conduire un courant intense entre des première et seconde interfaces de contact comprenant une partie de contact (67 ou 102) destinée à recevoir un courant d'une première interface de contact, une partie de corps (62 ou 100) s'étendant longitudinalement à l'écart de la partie de contact (67 ou 102), et une série de broches (70 ou 108, 106, 104) de connexion de cartes à circuits s'étendant depuis la partie de corps (62 ou 100) à des intervalles espacés longitudinalement, dans lequel des broches successives (70 ou 108, 106, 104), qui sont séparées d'une distance croissante de la partie de contact (67 ou 102), étant de résistivités différentes afin de tendre à égaliser le flux de courant passant par ces broches (70 ou 108, 106, 104) vers une seconde interface de contact.

9.  Assemblage de connecteurs selon la revendication 1, caractérisé par un module (11') de connecteurs transportant un courant intense, ayant un boîtier moulé d'une seule pièce en matière plastique et comprenant une paroi extérieure (136) définissant un logement ayant une partie avant ouverte et une saillie (130) située centralement à l'intérieur du logement et s'étendant vers la partie avant de manière que soit défini, entre la paroi (136) et la saillie (130), un premier évidement de réception de borne ; une borne (120) reçue dans l'évidement et ayant un anneau de doigts (122) de contact à ressort en porte-à-faux faisant saillie vers l'avant autour de la saillie (130) en un emplacement établi en arrière d'une extrémité avant de la saillie (130), afin qu'une borne d'accouplement de forme complémentaire de celle de la borne (120) puisse être reçue dans le logement en enclenchement électrique d'accouplement avec elle, la saillie empêchant un contact manuel accidentel avec la borne (120) dans un état désaccouplé du module (11') de connecteurs.

10. Assemblage de connecteurs selon la revendication 1, caractérisé par une paire (30, 30' ou 230, 232) de modules de polarisation dont un module (230) comprend un boitier (234) moulé en matière plastique et présentant une cavité (238) à faces multiples, une saillie (242) de polarisation ayant une surface correspondante à faces multiples destinée à être reçue dans ladite cavité (234) dans des positions différentes, en rotation, correspondant à l'opposition de faces différentes respectives de la cavité (234) et de la saillie (242), une extrémité avant de la saillie (242) étant exempte d'une face d'accouplement du boîtier pour réaliser un engagement d'accouplement avec une cavité correspondante (240) à faces multiples de l'autre module (232) de la paire (230, 232), l'autre extrémité de la saillie (242) étant formée de façon à présenter une gorge (270) et un anneau à encliqueter destiné à être inséré à travers une ouverture d'accès (250) dans le boîtier (234) pour amener des doigts opposés respectifs de l'anneau à encliqueter dans la gorge (270) afin de verrouiller la saillie axialement dans le boîtier (234) dans l'une quelconque des positions en rotation, une partie extrême (249) de l'anneau à encliqueter s'étendant depuis le boîtier pour être engagée par un outil de libération afin de retirer l'anneau à encliqueter de la gorge pour libérer ainsi la saillie (242) pour sa libération de la cavité (238) et une rotation vers une autre position de polarisation.

11. Assemblage de connecteurs selon la revendication 10, caractérisé en ce que la saillie (242) est formée de façon à présenter une rainure (272) de réception d'une clavette située de façon à s'étendre axialement et excentriquement sur sa longueur, le boîtier (236) de l'autre module (232) étant pourvu d'une clavette (244) située de façon à faire saillie excentriquement de la cavité (240) de l'autre module (232) depuis la face d'accouplement dans l'une de plusieurs positions en rotation, afin que la clavette (244) soit reçue dans la rainure (272) lorsque la saillie (242) est accouplée avec la cavité (240) de l'autre module (230) pour réaliser un accouplement polarisé des paires (230, 232) de modules.

FIG. 1

EP 0 246 750 B1

FIG. 2

FIG.3A

FIG.3B

14

69

66

64

60

65

62

67

70

Fig.4A

86

85

82

84

80

Fig.4B

Fig.5A

Fig.5B

FIg.6a

FIg.6b

Fig.5c

92
92

Fig.7

104
140
11
104
106
108
126
11'
122
120
34'
130
136
102
129
129

Fig.8a

Fig.8b

Fig.10

Fig.9b

Fig.9a